# FASCICULE DE BREVET EUROPEEN

(11) **EP 0 654 313 B1**
(45) Date de publication et mention de la délivrance du brevet: **30.12.1998**
(21) Numéro de dépôt: 94402321.7
(22) Date de dépôt: 17.10.1994
(51) Int. Cl.: B22D 11/12, B21D 19/00, B08B 7/02

(54) **Machine d'ébavurage de brames issues d'une installation de coulée continue et rotor utilisé dans ce type de machine d'ébavurage**
Vorrichtung zum Entgraten von stranggegossenen Bremmen und Rotor für solche Vorrichtung
Deburring apparatus for continuous cast slabs and rotor for this apparatus

(30) Priorité: 18.11.1993 FR 9313794
(43) Date de publication de la demande: 24.05.1995
(73) Titulaire: SOLLAC, 92800 Puteaux (FR)
(72) Inventeur: Meunier, Jacques, F-59640 Petite Synthe (FR); Coppin, Francis, F-59190 Hazebrouck (FR); Duval, Dominique, F-62115 Oyes Plage (FR)
(74) Mandataire: Lanceplaine, Jean-Claude

(56) Documents cités:
- EP-A- 0 198 768
- WO-A-90/06195
- DE-A- 3 700 207
- GB-A- 2 059 839
- PATENT ABSTRACTS OF JAPAN vol. 17, no. 59 (M-1363) 5 Février 1993 & JP-A-04 270 044 (NKK CORP) 25 Septembre 1992

## Description

La présente invention concerne une machine d'ébavurage de brames issues d'une installation de coulée continue et mises à la longueur désirée par oxycoupage.

La présente invention concerne également un rotor pour ce type de machine d'ébavurage de brames.

La coulée continue d'acier permet d'obtenir un produit qui se présente sous la forme d'une bande d'acier épaisse, qu'il est nécessaire de couper à des longueurs déterminées pour former des brames qui sont ensuite traitées dans des opérations ultérieures de laminage.

Le produit issu de l'installation de coulée continue est transformé en brames par oxycoupage à l'aide d'un chalumeau qui projette son jet perpendiculairement à l'une des faces de la bande et provoque sur la face opposée à celle recevant le jet du chalumeau, des bavures d'acier en fusion.

Ces bavures, constituées des résidus d'oxycoupage, se forment en raison de la perturbation de l'évacuation des résidus de coupe engendrés par la détente des gaz résiduels à la sortie de la fente de découpage.

L'effet de ce phénomène provoque un collage des résidus non évacués sur chaque bord d'extrémité de la face inférieure des brames.

Dans le but d'éliminer ces bavures, on connaît dans le FR-A-2 467 041, une machine d'ébavurage comportant un ensemble de lames tranchantes portées par un chariot dont la translation suivant l'axe longitudinal de la brame sous la face inférieure de celle-ci, et après mise en contact des arrêtes tranchantes avec cette face, sectionnent les résidus d'oxycoupage.

Mais, cette machine d'ébavurage nécessite un arrêt de la brame pour l'opération d'ébavurage et, de plus, il convient de prévoir deux machines symétriques opposées, en regard de la même face de cette brame, respectivement pour éliminer les bavures en tête et en pied de ladite brame.

Un tel arrêt de chaque brame constitue une opération extrêmement préjudiciable à la productivité de l'installation, et la présence de deux machines augmente sensiblement le coût.

On connaît par ailleurs dans le FR-A-2 580 203, une machine rotative comprenant un rotor monté horizontalement dans un bâti et portant dans sa périphérie des marteaux escamotables dont les têtes décrivent une enveloppe qui est amenée sensiblement tangentielle à la face inférieure de la brame.

La machine est placée sous la face inférieure principale de la brame, dont les bords d'extrémité de tête et de pied comportent des bavures, l'axe du rotor étant disposé parallèlement à la face de la brame et à une distance telle que les têtes des marteaux entraînés en rotation décrivent une enveloppe circulaire tangentielle à la face inférieure de cette brame et arrachent ainsi les bavures qui sont en saillie sur cette face.

Dans cette machine, le rotor comprend un moyeu sur lequel sont fixées des joues palières régulièrement espacées dans la direction de l'axe longitudinal du moyeu.

Ces joues palières reçoivent un ensemble de broches d'articulation régulièrement réparties sur la périphérie des joues palières et les marteaux sont montés sur les broches d'articulation.

Une telle construction permet d'obtenir sur une même ligne une série de marteaux successifs, les uns à côté des autres, sauf au niveau des joues palières.

Ainsi, les bavures ne sont arrachées qu'au niveau des emplacements des marteaux et non au niveau des emplacements des joues palières.

Les portions de bavures non arrachées par la machine d'ébavurage doivent donc être arrachées manuellement, par exemple au moyen d'une meule. On connaît également dans le WO-A-90/06195 une machine d'ébavurage qui comprend un rotor monté horizontalement, portant à sa périphérie des marteaux escamotables dont les têtes décrivent une enveloppe qui est amenée sensiblement tangentielle à la face inférieure de la brame.

Chaque ensemble de marteaux est décalé d'un angle de 45° par rapport à l'ensemble adjacent.

Mais, dans cette machine d'ébavurage, il demeure entre les ensembles de marteaux des espaces vides au niveau desquels des bavures ne sont pas arrachées.

L'invention a donc pour but d'éviter ces inconvénients en proposant une machine d'ébavurage de brames qui ne nécessite aucun arrêt de la brame au moment de l'ébavurage et qui permet d'arracher la totalité des bavures.

L'invention a donc pour objet une machine d'ébavurage de brames issues d'une installation de coulée continue et mises à la longueur désirée par oxycoupage, du type comprenant un rotor monté horizontalement dans un bâti et portant à sa périphérie des marteaux autoescamotables dont les têtes décrivent une enveloppe lors de la rotation du rotor et des moyens de déplacement vertical du rotor pour amener l'enveloppe décrite par lesdits marteaux sensiblement tangentielle à la face inférieure desdites brames, ledit rotor comprenant un moyeu sur lequel est fixée, à chaque extrémité, une joue palière en forme de virole circulaire, caractérisée en ce que le moyeu comprend, entre ces deux joues palières, des couples de demi-joues palières en forme de demi-viroles circulaires, adjacentes et opposées, chaque couple de demi-joues palières étant régulièrement espacé dans la direction longitudinale du moyeu et l'une des demi-joues palières de chaque couple étant décalée dans ladite direction longitudinale par rapport à l'autre des demi-joues palières dudit couple et lesdites joues palières recevant un ensemble de broches d'articulation parallèles à l'axe du moyeu et portant les marteaux,

Selon d'autres caractéristiques de l'invention :
- les couples de demi-joues palières sont symétriques les uns par rapport aux autres,
- le plan longitudinal de séparation de deux demi-joues palières d'un couple est décalé d'un angle de 45° ou 90° par rapport au plan longitudinal de séparation des deux demi-joues palières du couple précédent,
- les marteaux ont chacun la forme d'une masse allongée dont l'une des extrémités constituant la tête a la forme d'une queue d'aronde, et dont l'autre extrémité comporte un alésage de diamètre supérieur au diamètre des broches d'articulation portant lesdits marteaux.

L'invention a également pour objet un rotor pour machine d'ébavurage de brames issues d'une installation de coulée continue et mises à la longueur désirée par oxycoupage, ledit rotor portant à sa périphérie des marteaux auto-escamotables et comprenant un moyeu sur lequel est fixée, à chaque extrémité, une joue palière en forme de virole circulaire, caractérisé en ce que le moyeu comprend entre ces deux joues palières, des couples de demi-joues palières en forme de demi-viroles circulaires, adjacentes et opposées, chaque couple de demi-joues palière étant régulièrement espacé dans la direction longitudinale du moyeu et l'une des demi-joues palière de chaque couple étant décalée dans ladite direction longitudinale par rapport à l'autre des demi-joues palières dudit couple, et lesdites joues palières et lesdites demi-joues palières recevant un ensemble de broche d'articulation parallèles à l'axe du moyeu et portant les marteaux.

Selon d'autres caractéristiques de l'invention :
- les couples de demi-joues palières sont symétriques les uns par rapport aux autres,
- le plan longitudinal de séparation de deux demi-joues palières d'un couple est décalé d'un angle de 45° ou 90° par rapport au plan longitudinal de séparation des deux demi-joues palières du couple précédent.

Les caractéristiques et avantages de l'invention apparaîtront au cours de la description qui va suivre, donnée uniquement à titre d'exemple et faite en référence aux dessins annexés, sur lesquels :
- la Figure 1 est une vue schématique en élévation du rotor de la machine d'ébavurage selon l'invention,
- la Figure 2 est une vue en coupe selon la ligne 2.2 de la Figure 1,
- la Figure 3 est une vue en coupe selon la ligne 3.3 de la Figure 1,
- la Figure 4 est une vue en coupe selon la ligne 4.4 de la Figure 1,
- la Figure 5 est une vue partielle en élévation des marteaux auto-escamotables disposés à la périphérie du rotor, l'un des marteaux étant représenté en coupe,
- la Figure 6 est une vue schématique en élévation d'une variante de réalisation du rotor de la machine d'ébavurage selon l'invention.

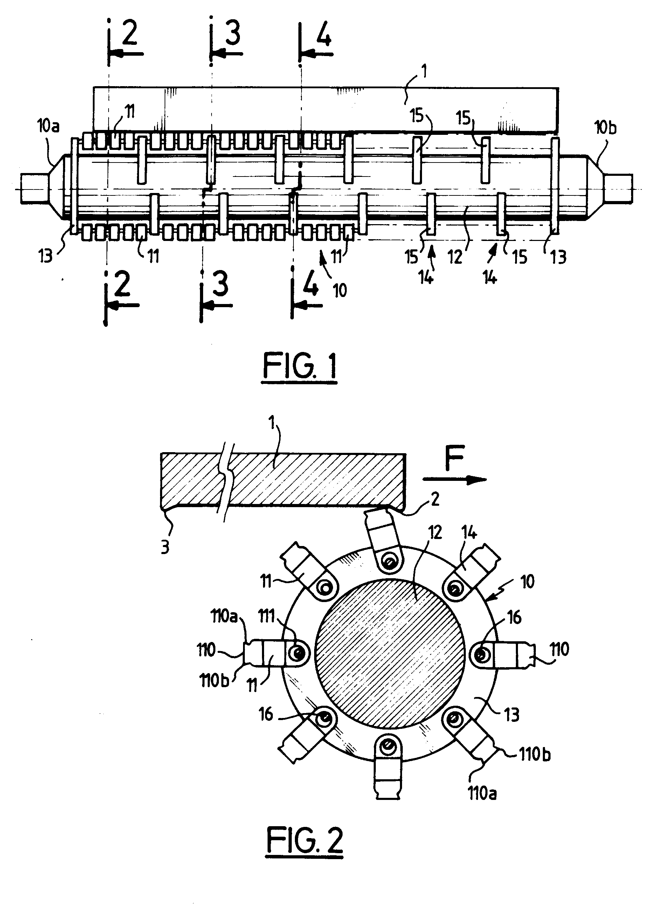

Comme représenté sur les figures 1 et 2, une brame 1 préalablement mise à la longueur désirée par oxycoupage dans un poste non représenté, situé en amont du sens de défilement de ladite brame 1 indiquée par la flèche F, comporte le long des bords d'extrémité de sa face inférieure des bavures 2 et 3.

La machine d'ébavurage comporte un rotor 10 muni à sa périphérie de marteaux 11 auto-escamotables et entraînés en rotation par ledit rotor 10.

Le rotor 10 comprend un moyeu 12 sur lequel sont fixés, à chaque extrémité 10a et 10b, une joue palière 13 en forme de virole circulaire et, entre ces joues palières 13, des couples 14 de demi-joues palières 15 en forme de demi-viroles circulaires adjacentes et opposées.

Chaque couple 14 de demi-joues palières 15 est régulièrement espacé dans la direction longitudinale du moyeu 12 et l'une des demi-joues palières 15 de chaque couple 14 est décalée dans la direction longitudinale du moyeu 12 par rapport à l'autre des demi-joues palières 15 dudit couple 14.

Comme représenté sur les figures 2 à 5, les joues palières 13 et les demi-joues palières 15 reçoivent une ensemble de broches d'articulation 16 disposées à égale distance de l'axe du moyeu 12 et régulièrement réparties sur la périphérie des joues palières 13 et des demi-joues palières 15.

Selon le mode de réalisation représenté sur les figures, huit broches 16 sont disposées entre les joues palières 13 et les demi-joues palières 15, le nombre de broches d'articulation pouvant être différent.

Les marteaux sont montés fous sur les broches d'articulation 16. Ces marteaux 11 se présentent sous la forme d'une masse allongée, dont l'une des extrémités constituant la tête 110 a la forme d'une queue d'aronde, et dont l'autre extrémité comporte un alésage 111 de diamètre supérieur au diamètre des broches d'articulation 16, réalisant ainsi un jeu radial entre ces deux éléments.

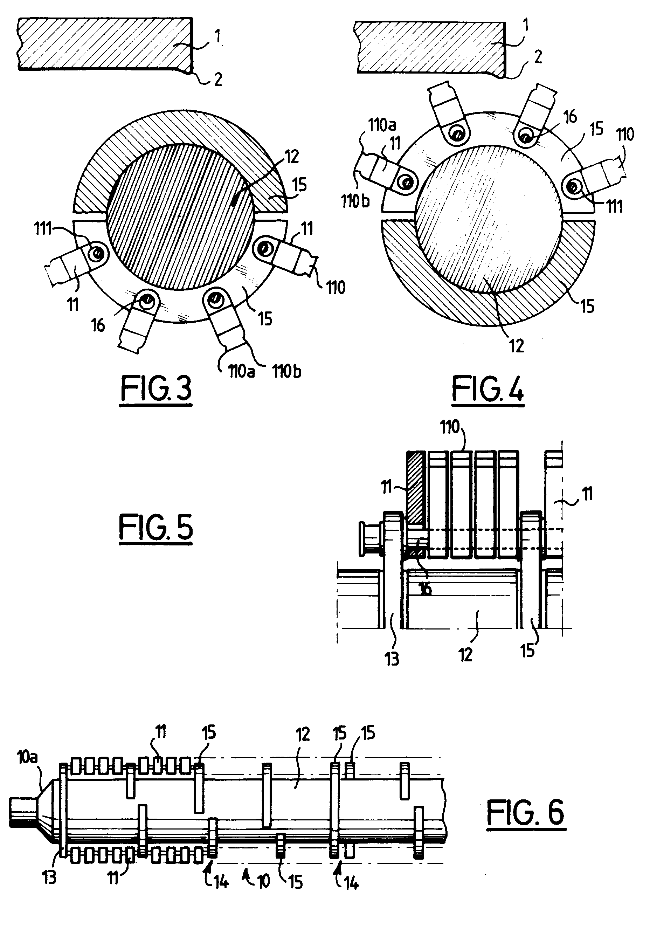

Comme représenté à la figure 5, un groupe de marteaux 11 est monté sur une broche d'articulation 16 commune traversant l'ensemble des couples 14 de demi-joues palières 15 et s'étendant d'une joue palière 13 d'extrémité à l'autre, parallèlement à une génératrice du moyeu 12.

Les têtes 110 des marteaux 11 en forme de queue d'aronde possèdent deux arrêtes 110a et 110b symétriques, si bien que les marteaux 11 peuvent être utilisés dans un sens de rotation du rotor 10 ou dans l'autre.

Les marteaux 11 sont auto-escamotables et entraînés en rotation par le moyeu 12 et sous l'effet de la force centrifuge, prennent une position radiale la plus éloignée de l'axe dudit moyeu 12.

La position de l'axe du moyeu 12 par rapport à la face inférieure de la brame 1 est réglée par des moyens de déplacement vertical, non représentés, dudit moyeu 12, de telle façon que, lors de la rotation du rotor 10, l'enveloppe décrite par les arrêtes 110a et 110b des têtes 110 soit sensiblement tangente à la face inférieure de la brame 1 et sécante aux bavures 2 ou 3.

Le choc de l'une des arrêtes 110a ou 110b de la tête 110 des marteaux 11 sur la bavure 2 ou 3 fournit l'énergie nécessaire à l'arrachement de celle-ci.

Sous l'effet du choc, le premier marteau 11 s'escamote angulairement si son énergie n'est pas suffisante pour arracher la bavure lors d'une première passe, et le marteau 11 suivant vient frapper le reste de la bavure jusqu'à son élimination totale. On règle ainsi, en fonction de la vitesse de déplacement de la brame 1, la vitesse de rotation du moyeu 12 pour obtenir une élimination totale de la bavure par les chocs successifs des marteaux 11 sur cette dernière.

Le nombre de broches d'articulation 16 supportant les marteaux 11 est déterminé par la vitesse de rotation du moyeu 12, la vitesse de déplacement de la brame 1 et le nombre d'impacts nécessaire sur la bavure pour assurer son arrachement lors de son passage au-dessus de la machine d'ébavurage.

Le décalage dans la direction longitudinale du moyeu 12 de l'une des demi-joues palières 15 de chaque couple 14 par rapport à l'autre des demi-joues palières 15 de ce couple, forme une ligne continue de marteaux 11 successifs les uns à côté des autres, même au niveau des demi-joues palières 15.

Selon un premier mode de réalisation représenté sur la figure 1, les couples 14 de demi-joues palières 15 sont symétriques les uns par rapport aux autres.

Selon un second mode de réalisation représenté à la figure 6, le plan longitudinal de séparation de deux demi-joues palières 15 d'un couple 14 est décalé d'un angle de 45° par rapport au plan longitudinal de séparation des deux demi-joues palières 15 du couple 14 précédent.

Par ailleurs, le plan longitudinal de séparation de deux demi-joues palières 15 d'un couple 14 peut être décalé d'un angle de 30° ou 90° par rapport au plan longitudinal de séparation des deux demi-joues palières 15 du couple précédent 14, ce qui permet de mieux répartir les zones du rotor 10 non pourvues de marteaux 11.

La machine d'ébavurage selon l'invention permet d'attaquer la bavure de la brame par un marteau sur toute la longueur de ladite bavure.

## Revendications

1. Machine d'ébavurage de brames (1) issues d'une installation de coulée continue et mises à la longueur désirée par oxycoupage, du type comprenant un rotor (10) monté horizontalement dans un bâti et portant à sa périphérie des marteaux (11) auto-escamotables, dont les têtes (110) décrivent une enveloppe lors de la rotation du rotor (10) et des moyens de déplacement vertical du rotor (10) pour amener l'enveloppe décrite par lesdits marteaux (11) sensiblement tangentielle à la face inférieure desdites brames (1), ledit rotor (10) comprenant un moyeu (12) sur lequel est fixée, à chaque extrémité (10a, 10b) une joue palière (13) en forme de virole circulaire, caractérisée en ce que le moyeu (12) comprend, entre ces deux joues palières (13), des couples (14) de demi-joues palières (15) en forme de demi-virole circulaire, adjacentes et opposées, chaque couple (14) de demi-joues palières (15) étant régulièrement espacé dans la direction longitudinale du moyeu (12) et l'une des demi-joues palières (15) de chaque couple (14) étant décalée dans ladite direction longitudinale par rapport à l'autre des demi-joues palières (15) du couple (14) et lesdites joues palières (13) et lesdites demi-joues palières (15) recevant un ensemble de broches d'articulation (16) parallèles à l'axe du moyeu (12) et portant les marteaux (11).

2. Machine d'ébavurage selon la revendication 1, caractérisée en ce que les couples (14) de demi-joues palières (15) sont symétriques les uns par rapport aux autres.

3. Machine d'ébavurage selon la revendication 1, caractérisée en ce que le plan longitudinal de séparation de deux demi-joues palières (15) d'un couple (14) est décalé d'un angle de 45° ou 90° par rapport au plan longitudinal de séparation des deux demi-joues palières (15) du couple (14) précédent.

4. Machine d'ébavurage selon l'une des revendications 1 à 3, caractérisée en ce que les marteaux (11) ont chacun la forme d'une masse allongée dont l'une des extrémités constituant la tête (110) a la forme d'une queue d'aronde et dont l'autre extrémité comporte un alésage (111) de diamètre supérieur au diamètre des broches d'articulation (16) portant lesdits marteaux (11).

5. Rotor pour machine d'ébavurage de brames (1) issues d'une installation de coulée continue et mises à la longueur désirée par oxycoupage, ledit rotor (10) portant à sa périphérie des marteaux (11) auto-escamotables et comprenant un moyeu (12) sur lequel est fixée, à chaque extrémité, une joue palière (13) en forme de virole circulaire, caractérisé en ce que le moyeu (12) comprend entre ces deux joues palières (13), des couples (14) de demi-joues palières (15) en forme de demi-virole circulaire, adjacentes et opposées, chaque couple (14) de demi-joues palières (15) étant régulièrement espacé dans la direction longitudinale du moyeu (12) et l'une des demi-joues palières (15) de chaque couple (14) étant décalée dans ladite direction longitudinale par rapport à l'autre des demi-joues palières (15) dudit couple (14) et lesdites joues palières (13) et lesdites demi-joues palières (15) recevant un ensemble de broches d'articulation (13) parallèles à l'axe du moyeu (12) et portant les marteaux (11).

6. Rotor pour machine d'ébavurage selon la revendication 5, caractérisé en ce que les couples (14) de demi-joues palières (15) sont symétriques les uns par rapport aux autres.

7. Rotor pour machine d'ébavurage selon la revendication 5, caractérisé en ce que le plan longitudinal de séparation de deux demi-joues palières (15) d'un même couple (14) est décalé d'un angle de 45° ou 90° par rapport au plan longitudinal de séparation des deux demi-joues palières (15) du couple (14) précédent.

## Claims

1. Machine for trimming slabs (1) which have been issued from a continuous casting plant and cut to the desired length by oxygen cutting, of the type comprising a rotor (10), mounted horizontally in a frame and bearing at its periphery self-retracting hammers (11), the heads (110) of which describe a shell during rotation of the rotor (10) and means for the vertical displacement of the rotor (10) for moving said shell by said hammers (11) approximately tangentially to the lower face of said slabs (1), said rotor (10) comprising a hub (12) on which there is fixed at each end (10a, 10b) an entrance cheek (13) in the form of a circular ferrule,
characterised in that
the hub (12) comprises, between these two entrance cheeks (13), pairs (14) of half-entrance cheeks (15) which are in the form of a circular half-ferrule and are adjacent and opposite, each pair (14) of half-entrance cheeks (15) being spaced at regular intervals in the longitudinal direction of the hub (12) and one of the half-entrance cheeks (15) of each pair (14) being offset in the said longitudinal direction relative to the other of the half-entrance cheeks (15) of the pair (14) and said entrance cheeks (13) and said half-entrance cheeks (15) receiving an assembly of articulation pins (16) which are parallel to the axis of the hub (12) and bearing the hammers (11).

2. Machine for trimming according to Claim 1,
characterised in that
the pairs (14) of half-entrance cheeks (15) are symmetrical to one another.

3. Machine for trimming according to Claim 1,
characterised in that
the longitudinal plane of separation of two half-entrance cheeks (15) of a pair (14) is offset by an angle of 45° or 90° relative to the longitudinal plane of separation of the two half-entrance cheeks (15) of the preceding pair (14).

4. Machine for trimming according to one of the Claims 1 to 3,
characterised in that
the hammers (11) each have the form of an extended body, one of the ends of which, constituting the head (110), has the form of a dovetail and the other end of which comprises a boring (111) with a diameter which is greater than the diameter of the articulation pins (16) bearing said hammers (11).

5. Rotor for a trimming machine for slabs (1) which have been issued from a continuous casting plant and cut to the desired length by oxygen cutting, said rotor (10) bearing self-retracting hammers (11) at its periphery and comprising a hub (12) on which there is fixed at each end an entrance cheek (13) in the form of a circular ferrule,
characterised in that
the hub (12) comprises between these two entrance cheeks (13) pairs (14) of half-entrance cheeks (15) which are in the form of a circular half ferrule and which are adjacent and opposite, each pair (14) of half-entrance cheeks (15) being spaced at regular intervals in the longitudinal direction of the hub (12) and one of the half-entrance cheeks (15) of each pair (14) being offset in the said longitudinal direction relative to the other of the half-entrance cheeks (15) of said pair (14) and said entrance cheeks (13) and said half-entrance cheeks (15) receiving an assembly of articulation pins (16) which are parallel to the axis of the hub (12) and bearing the hammers (11).

6. Rotor for a trimming machine according to Claim 5,
characterised in that
the pairs (14) of half-entrance cheeks (15) are symmetrical relative to one another.

7. Rotor for a trimming machine according to Claim 5,
characterised in that
the longitudinal plane of separation of two half-entrance cheeks (15) of an identical pair (14) is offset by an angle of 45° or 90° relative to the longitudinal plane of separation of the two half-entrance cheeks (15) of the preceding pair (14).

## Patentansprüche

1. Maschine zum Abschneiden von Brammen (1), die von einer kontinuierlichen Gießanlage ausgegeben und auf die gewünschte Länge durch Brennschneiden gebracht werden, mit einem Rotor (10), der horizontal in einem Gestell angebracht ist und an seinem Umfang automatisch einziehbare Hämmer (11) aufweist, deren Köpfe (110) bei der Drehung des Rotors (10) eine Hüllkurve beschreiben, und mit einer Einrichtung zum vertikalen Verstellen des Rotors (10), um die durch die Hämmer (11) beschriebene Hüllkurve im wesentlichen tangential zur Innenfläche der Brammen (1) mitzunehmen, wobei der Rotor (10) eine Nabe (12) aufweist, auf welcher an jedem Ende (10a, 10b) ein Führungslager (13) in Form eines Kreisrings befestigt ist, dadurch gekennzeichnet, daß die Nabe (12) zwischen diesen zwei Führungslagern (13) Paare (14) von Halbführungslagern (15) in Form eines halbkreisförmigen Rings benachbart und einander gegenüberliegend aufweist, wobei jedes Paar (14) von Halbführungslagern (15) in der Längsrichtung der Nabe (12) gleichmäßig beabstandet sind und das eine der Halbführungslager (15) jedes Paars (14) in der Längsrichtung in bezug auf das andere der Halbführungslager (15) des Paars (14) versetzt ist, und die Führungslager (13) sowie die Halbführungslager (15) eine Längsspindeleinheit (16) parallel zur Achse der Nabe (12) aufnehmen und die Hämmer (11) tragen.

2. Abschneidemaschine nach Anspruch 1, dadurch gekennzeichnet, daß die Paare (14) der Halbführungslager (15) in bezug aufeinander symmetrisch sind.

3. Abschneidemaschine nach Anspruch 1, dadurch gekennzeichnet, daß die Längstrennebene der zwei Halbführungslager (15) eines Paars (14) unter einem Winkel von 45° oder 90° in bezug auf die Längstrennebene der zwei Halbführungslager (15) des vorausgehenden Paars (14) versetzt ist.

4. Abschneidemaschine nach einem der Ansprüche 1 bis 3, dadurch gekennzeichnet, daß die Hämmer (11) jeweils die Form einer länglichen Masse aufweisen, deren eines Ende den Kopf (110) in der Form eines runden Endstücks bildet und deren anderes Ende eine Bohrung (111) mit einem Durchmesser umfaßt, der größer ist als der Durchmesser der Gelenkspindeln (16), welche die Hämmer (11) trafen.

5. Rotor für eine Maschine zum Abschneiden von Brammen (1) die von einer kontinuierlichen Gießanlage ausgegeben und auf die gewünschte Länge durch Brennschneiden gebracht werden, wobei der Rotor (10) an seinem Umfang automatisch einziehbare Hämmer (11) trägt und eine Nabe (12) aufweist, auf welcher an jedem Ende ein Führungslager (13) in Form eines Kreisrings befestigt ist, dadurch gekennzeichnet, daß die Nabe (12) zwischen diesen zwei Führungslagern (13) Paare (14) von Halbführungslagern (15) in Form eines halbkreisförmigen Rings benachbart und einander gegenüberliegend aufweist, wobei jedes Paar (14) von Halbführungslagern (15) in der Längsrichtung der Nabe (12) gleichmäßig beabstandet sind, und eines der Halbführungslager (15) jedes Paars (14) in der Längsrichtung in bezug auf das andere der Halbführungslager (15) des Paars (14) versetzt ist, und die Führungslager (13) sowie die Halbführungslager (15) eine Längsspindeleinheit (16) parallel zur Achse der Nabe (12) aufnehmen und die Hämmer (11) tragen.

6. Rotor für eine Abschneidemaschine nach Anspruch 5, dadurch gekennzeichnet, daß die Paare (14) der Halbführungslager (15) in bezug aufeinander symmetrisch sind.

7. Rotor für eine Abschneidemaschine nach Anspruch 5, dadurch gekennzeichnet, daß die Längstrennebene der zwei Halbführungslager (15) eines Paars (14) unter einem Winkel von 45° oder 90° in bezug auf die Längstrennebene der zwei Halbführungslager (15) des vorausgehenden Paars (14) versetzt ist.
